(19) **Europäisches Patentamt European Patent Office Office européen des brevets**

(11) **EP 2 144 953 B1**

(12) **EUROPEAN PATENT SPECIFICATION**

(45) Date of publication and mention
of the grant of the patent:
**16.05.2012 Bulletin 2012/20**

(51) Int Cl.:
*C08G 77/56* (2006.01)    *C08L 83/04* (2006.01)
*C08G 77/26* (2006.01)    *C08G 59/56* (2006.01)
*C08G 77/388* (2006.01)    *C08J 3/12* (2006.01)
*C08L 63/00* (2006.01)    *C08G 59/62* (2006.01)

(21) Application number: **08752399.9**

(22) Date of filing: **25.04.2008**

(86) International application number:
**PCT/JP2008/058507**

(87) International publication number:
**WO 2008/142998 (27.11.2008 Gazette 2008/48)**

(54) **CROSS-LINKED SILICONE PARTICLES AND METHOD OF MANUFACTURING THEREOF**

VERNETZTE SILIKONPARTIKEL UND VERFAHREN ZU IHRER HERSTELLUNG

PARTICULES DE SILICONE RÉTICULÉES ET PROCÉDÉ DE FABRICATION DE CELLES-CI

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **16.05.2007 JP 2007130546**

(43) Date of publication of application:
**20.01.2010 Bulletin 2010/03**

(73) Proprietor: **Dow Corning Toray Co., Ltd.**
**Tokyo 100-0005 (JP)**

(72) Inventors:
• **MORITA, Yoshitsugu**
  **Ichihara-shi**
  **Chiba 299-0108 (JP)**
• **KOBAYASHI, Kazuo**
  **Ichihara-shi**
  **Chiba 299-0108 (JP)**
• **UEKI, Hiroshi**
  **Ichihara-shi**
  **Chiba 299-0108 (JP)**

(74) Representative: **Gillard, Richard Edward et al**
**Elkington and Fife LLP**
**Thavies Inn House**
**3-4 Holborn Circus**
**London EC1N 2HA (GB)**

(56) References cited:
**EP-A- 1 186 641    DE-A1- 3 738 634**
**JP-A- 4 266 928**

**Description**

The present invention relates to cross-linked silicone particles and the method of manufacturing such particles.

Background Art

Known in the art are cross-linked silicone particles formed by bonding 3-aminopropyl groups or similar primary amino groups as well as N-(2-aminoethyl)-3-aminopropyl groups or similar secondary amino groups to silicon atoms that form cross-linked silicone particles (see Japanese Unexamined Patent Application Publications H02-113079, H04-266928, and H08-109262). Furthermore, it is also known that by combining such cross-linked silicone particles with a curable epoxy-resin composition, it is possible to reduce the modulus of elasticity in a cured body obtained from such a composition as well as to improve resistance of the cured body to moisture and cracking.

However, the aforementioned known cross-linked silicone particles are insufficiently dispersible in organic resin, such as epoxy resin. Furthermore, a curable organic resin composition, such as a curable epoxy-resin composition that incorporates the aforementioned cross-linked silicone particles, shows a tendency to gel during manufacture or storage, or flowability of the composition is impaired during molding.

It is an object of the present invention to provide cross-linked silicone particles that demonstrate excellent dispersibility in organic resins and, when added to curable organic resin compositions, improve flowability of the aforementioned compositions during molding and produce curable bodies with low modulus of elasticity.

Disclosure of Invention

The cross-linked silicone particles of the invention are characterized by having secondary amino groups represented by general formula:

$$R^1NH\text{-}R^2\text{-}$$

(where $R^1$ designates an aryl group or an aralkyl group, and $R^2$ designates a bivalent organic group) bonded to silicon atoms that form the cross-linked silicone particles.

The method of the invention for manufacturing the aforementioned cross-linked silicone particles consists of cross-linking a cross-linkable silicone composition comprising components (A) to (C), given below, wherein the composition is cross-linked in a water-dispersed state:

   (A) an organopolysiloxane that contains in one molecule at least two silanol groups;
   (B) an alkoxysilane that contains secondary amino group and is represented by the following general formula:

$$R^1NH\text{-}R^2\text{-}SiR^4_a(OR^5)_{(3\text{-}a)}$$

(where $R^1$ is an aryl group or an aralkyl group; $R^2$ is a bivalent organic group; $R^4$ is a univalent hydrocarbon group; $R^5$ is an alkyl group; and "a" is 0 or 1); and
   (C) a condensation-reaction catalyst.

Effects of Invention

An effect of the invention is that the cross-linkable silicone particles of the invention demonstrate excellent dispersibility in organic resins and, when added to curable organic resin compositions, improve flowability of the aforementioned compositions during molding and produce curable bodies with low modulus of elasticity. Furthermore, the method of the invention efficiently produces the aforementioned cross-linkable silicone particles.

Detailed Description of the Invention

Let us first consider in more detail the cross-linked silicone particle of the invention.

The cross-linked silicone particles of the invention are characterized by having secondary amino groups represented by general formula:

$$R^1NH\text{-}R^2\text{-}$$

bonded to silicon atoms that form the cross-linked silicone particles.

In the above formula, $R^1$ designates aryl groups or aralkyl groups. The aryl groups represented by $R^1$ may be exemplified by phenyl, tolyl, xylyl, and naphthyl groups, and aralkyl groups represented by $R^1$ may be represented by benzyl, phenethyl, and phenylpropyl groups. Among these, most preferable are phenyl groups. In the above formula, bivalent organic groups designated by $R^2$ can be represented by ethylene, methylethylene, propylene, butylene, pentylene, hexylene, or similar alkylene groups; ethyleneoxyethylene, ethyleneoxypropylene, ethyleneoxybutylene, propyleneoxypropylene, or similar alkyleneoxyalkylene groups. Of these, most preferable are alkylene groups, in particular, ethylene and propylene groups.

There are no special restrictions with regard to the form in which the cross-linked silicone particles can be used. For example, they can be in the form of gel, rubber, or hard resin, of which the rubber form is preferable. Among rubber-like cross-linked silicone particles, most preferable are particles having organosiloxane blocks represented by the following general formula:

$$-(R^3{}_2SiO)_n-$$

In the above formula, $R^3$ designates same or different univalent hydrocarbon groups such as methyl, ethyl, propyl, butyl, pentyl, hexyl, octyl, decyl, octadecyl, or similar alkyl groups; cyclopentyl, cyclohexyl, cycloheptyl, or similar cycloalkyl groups; vinyl, allyl, propenyl, hexenyl, or similar alkenyl groups; phenyl, tolyl, xylyl, or similar aryl groups; benzyl, phenethyl, phenylpropyl, or similar aralkyl groups; 3-chloropropyl, 3,3,3-trifluompropyl, or similar halogenated alkyl groups. Most preferable of these are methyl and phenyl groups. In the above formula, "n" is an integer equal to or greater than 3, preferably an integer in the range of 3 to 500, more preferably in the range of 5 to 500, and most preferably in the range of 5 to 100.

There are no special restrictions with regard to the shape of the cross-linked silicone particles, which may have a spherical, flat, or irregular shape. Spherical or substantially spherical particles are preferable since they provide excellent dispersibility in organic resins and improve flowability of the curable resin composition during molding if this composition incorporates the aforementioned cross-linked silicone particles. Also, there are no special restrictions with regard to an average size of the cross-linked silicone particles but it may be recommended to have an average size in the range of 0.1 to 500 $\mu$m, preferably 0.1 to 200 $\mu$m, more preferably 0.1 to 100 $\mu$m, and most preferably 0.1 to 50 $\mu$m. This is because the cross-linked silicone particles having dimension smaller than the recommended lower limit cannot be easily produced, while the particles with dimensions exceeding the recommended upper limit have low dispersibility in organic resins. The aforementioned average size of the particles can be represented by a median diameter (which is the particle diameter corresponding to 50% of the cumulative distribution) measured in an aqueous or ethanol dispersion of the particles with a Model LA-500 laser diffraction particle distribution measurement instrument of Horiba Seisakusho Co., Ltd.

There are no restrictions with regard to the amount in which the secondary amino groups can be contained in the cross-linked silicone particles, but preferably this amount should be in the range of 0.3 to 3.0 wt.%, more preferably 0.5 to 2.0 wt%, and most preferably 0.5 to 1.8 wt.%. If the cross-linked silicone particles contain secondary amino groups in an amount less than the recommended lower limit, this will impair either dispersibility of the particles in organic resins or reactivity of the curable organic resin composition. If, on the other hand, the content of the secondary amino groups in the cross-linked silicone particles exceeds the recommended upper limit, this will diminish stability of the particles during preparation or storage of the curable organic resin composition. The content of secondary amino groups in cross-linkable silicone particles can be determined by potential difference titration with use of a titrant in the form of a dioxane solution of perchloric acid and using the cross-linked silicone particles in a mixture of chloroform with acetic acid.

There are no special restrictions with regard to hardness of cross-linked silicone particles, but it may be recommended that hardness of these particles in terms of type-A durometer units according to JIS K 6253 be in the range of 15 to 90, preferably 40 to 90, and most preferably 50 to 90. If hardness of the cross-linked silicone particles is below the recommended lower limit in the type-A durometer scale, this will either impair dispersibility of the particles in organic resins, or reduce flowability of the curable organic resin composition during molding. If, on the other hand, hardness of the cross-linked particles exceeds the recommended upper limit, this will reduce modulus of elasticity in a cured body obtained by curing the aforementioned curable organic resin composition. Type A durometer hardness can be determined by measuring hardness of a sheet-like cured body obtained from a curable silicone composition prepared for forming curable silicone particles, hardness of the sheet-like body being measured after the composition has been cross-linked.

The following description relates to a method of manufacturing the cross-linked silicone particles of the present invention.

The manufacturing method of the present invention consists of cross-linking a cross-linkable composition comprising components (A) to (C), the composition being cross-linked in a water-dispersed state.

An organopolysiloxane of component (A) contains in one molecule at least two silanol groups. Silicon-bonded groups other than silanol groups contained in component (A) may be represented by methyl, ethyl, propyl, butyl, pentyl, hexyl, octyl, decyl, octadecyl, or similar alkyl groups; cyclopentyl, cyclohexyl, cycloheptyl, or similar cycloalkyl groups; vinyl, allyl, propenyl, hexenyl, or similar alkenyl groups; phenyl, tolyl, xylyl, or similar aryl groups; benzyl, phenethyl, phenylpropyl, or similar aralkyl groups; 3-chloropropyl, 3,3,3-trifluoropropyl, or similar halogenated alkyl groups. Most preferable are methyl and phenyl groups. There are no restrictions with regard to the molecular structure of component (A), and this component may have a linear or a partially branched linear structure. Also, there are no special restrictions with regard to viscosity of component (A) provided that the aforementioned composition can be easily dispersed in water. It may be recommended, however, to maintain the viscosity of component (A) at 25°C in the range of 20 to 100,000 mPa·s, preferably in the range of 20 to 10,000 mPa·s.

In order to provide component (A) in cross-linked silicone particles in the form of rubber with introduction of an organosiloxane block represented by the following general formula, $-(R^3_2SiO)_n-$, it is preferable to use an organopolysiloxane of the following general formula:

$$HO-(R^3_2SiO)_n-H$$

In this forcnula, $R^3$ designates same or different univalent hydrocarbon groups, which may be exemplified by the groups mentioned above. In the above formulae, "n" is an integer equal to or greater than 3 and may be represented by the same integers as mentioned above.

An alkoxysilane of component (B) that contains a secondary amino group is represented by the following general formula:

$$R^1NH-R^2-SiR^4_a(OR^5)_{(3-a)}$$

In this formula, $R^1$ designates an aryl group or an aralkyl group and may be exemplified by the groups mentioned above, of which the phenyl group is preferred; $R^2$ designates a bivalent organic group, which may be exemplified by the groups mentioned above and of which alkylene groups and especially ethylene and propylene groups are preferable; $R^4$ designates a univalent hydrocarbon group that may be represented by methyl, ethyl, propyl, butyl, pentyl, hexyl, octyl, decyl, octadecyl, or a similar alkyl group; cyclopentyl, cyclohexyl, cycloheptyl, or a similar cycloalkyl group; vinyl, allyl, propenyl, hexenyl, or a similar alkenyl group; phenyl, tolyl, xylyl, or a similar aryl group; benzyl, phenethyl, phenylpropyl, or a similar aralkyl group; 3-chloropropyl, 3,3,3-trifluoropropyl, or a similar halogenated alkyl group. Most preferable of these are methyl and phenyl groups. Furthermore, in the above formula, $R^5$ represents an alkyl group such as methyl, ethyl, or propyl grooup. Most preferable of these is methyl group. In the above formula, "a" is 0 or 1.

There are no special restrictions with regard to the amount in which component (B) can be used provided that this amount is sufficient for cross-linking the composition. It may be recommended to add component (B) in the amount of 0.01 to 100 parts by weight, preferably 0.01 to 50 parts by weight, and most preferably 0.01 to 20 parts by weight per 100 parts by weight of component (A). If component (B) is used in an amount less than the recommended lower limit, this will impair dispersibility of the obtained cross-linked silicone particles in organic resins and if, on the other hand, the added amount exceeds the recommended upper limit, this will impair cross-linking of the obtained silicone composition.

A condensation-reaction catalyst that constitutes component (C) is used to accelerate the condensation reaction of the aforementioned composition and may be represented by dibutyltin dilaurate, dibutyltin diacetate, tin octanoate, dibutyltin dioctate, tin laurate, or a similar organic tin compound; tetrabutyltitanate, tetrapropyltitanate, dibutoxybis (ethylacetoacetate) titanium, or a similar organic titanium compound; hydrochloric acid, sulfuric acid, dodecylbenzenesulfonic acid, or a similar acidic compound; and ammonia, sodium hydroxide, or a similar alkali compound. Of these, most preferable are organic tin compounds and organic titanium compounds.

There are no special restrictions with regard to the amount in which component (C) can be used provided that the amount accelerates the condensation reaction of the aforementioned compound. It may be recommended to add component (C) in the amount of 0.01 to 10 parts by weight, preferably 0.05 to 5 parts by weight per 100 parts by weight of component (A). If component (C) is added in an amount less than the recommended lower limit, this will impair cross-linking of the obtained silicone composition and if, on the other hand, the added amount exceeds the recommended upper limit, cross-linking of the obtained cross-linkable silicone composition will be over-accelerated to the extent that preparation of cross-linked silicone particles will be difficult.

If necessary, the aforementioned composition can be combined with arbitrary components such as an organopolysiloxane (D) that contains in one molecule at least two silicon-bonded hydrogen atoms. Silicon-bonded groups other than hydrogen atoms contained in component (D) may be represented by methyl, ethyl, propyl, butyl, pentyl, hexyl, octyl, decyl, octadecyl, or similar alkyl groups; cyclopentyl, cyclohexyl, cycloheptyl, or similar cycloalkyl groups; phenyl, tolyl, xylyl, or similar aryl groups; benzyl, phenethyl, phenylpropyl, or similar aralkyl groups; 3-chloropropyl, 3,3,3-trifluoropropyl, or similar halogenated alkyl groups, or other univalent hydrocarbon groups that are free of aliphatic unsaturated bonds. Of these, most preferable are methyl and phenyl groups. There are no special restrictions with regard to the molecular structure of component (D), and this component may have a linear, branched, partially branched linear, or cyclic structure, preferable of which is a linear structure. Also, there are no restrictions with regard to viscosity of component (D). However, it may be recommended that the viscosity at 25°C be in the range of 1 to 100,000 mPa·s, preferably in the range of 1 to 10,000 mPa·s.

Component (D) can be used in an arbitrary amount; however from the viewpoint of accelerating the cross-linking of the composition by adding component (D), it is preferable that component (D) be added in an amount less than 100 parts by weight, preferably 0.1 to 100 parts by weight, more preferably 0.1 to 50 parts by weight, and most preferably 0.1 to 30 parts by weight per 100 parts by weight of component (A). If component (D) is added in an amount less than the recommended lower limit, then it will be difficult to accelerate cross-linking of the obtained cross-linkable silicone composition. If, on the other hand, the added amount exceeds the upper recommended limit, then it will be difficult to cross-link the obtained silicone composition.

In order to improve mechanical strength of the obtained cross-linked silicone particles and to increase hardness of the particles, the composition can be additionally combined with ethylsilicate, tetraethoxysilane, methylsilicate, tetramethoxysilane, or similar compounds that can be added in amounts not contradictory to the objects of the present invention.

For further improvement of physical properties of the obtained cross-linked silicone particles, the composition may be combined with an inorganic filler, which may be represented by silicon oxide, titanium oxide, aluminum oxide, zirconium oxide, antimony oxide, or a similar finely powdered metal oxide; boron nitride, aluminum nitride, or a similar finely powdered metal nitride; aluminum hydroxide, magnesium hydroxide, or a similar finely powdered metal hydroxide; calcium carbonate or a similar metal carbonate; nickel, cobalt, iron, copper, gold, silver, or a similar fine metal powder; as well as finely powdered sulfide compounds and chloride compounds. From the viewpoint of availability, it is preferable to use finely powdered metal oxides, particularly finely powdered silica. Surface of the aforementioned inorganic fillers can be subjected to hydrophobization with organic silicon compounds such as organoalkoxysilane, organochlorosilane, organosilazane, or the like.

The manufacturing method of the invention consists of preparing a cross-linkable silicone composition comprising components (A), (B), and (C) and then cross-linking the composition in a water-dispersed state, or by preparing the silicone composition comprising components (A) and (B) and dispersing the obtained composition in water and cross-linking the composition after addition of component (C). In the latter case, component (C) can be added in the form of an aqueous dispersion prepared by dispersing particles of an average size not exceeding 10 μm in water.

A process that can be used in the manufacturing method of the invention for adjusting the size of the cross-linked silicone particles consists of adjusting viscosity of the cross-linkable silicone composition, by selecting a type of surfactant used for dispersing the cross-linkable silicone composition in water, or by adjusting stirring speed. Furthermore, after dispersing the silicone composition comprised of components (A) and (B) in a dispersing medium such as water, the size of the cross-linked silicone particles can be easily adjusted by adding component (C) and cross-linking [the mixture]. Another process consists of sorting the cross-linking silicone particles by passing them through a sieve.

The aforementioned surfactant may be exemplified by nonionic, anionic, cationic, or betainic surfactants. The size of the obtained cross-linked silicone particles can be adjusted by selecting the amount and type of the aforementioned surfactants. In order to adjust the cross-linked silicone particles to smaller sizes, it is recommended to add the surfactant in an amount of 0.5 to 50 parts by weight per 100 parts by weight of the cross-linkable silicone composition. On the other hand, in order to increase the size of the cross-linked silicone particles, it is recommended to add the surfactant in an amount of 0.1 to 10 parts by weight per 100 parts by weight of the cross-linkable silicone composition. In case of using water as a dispersing medium, water can be used in an amount of 20 to 1500 parts by weight per 100 parts by weight of the cross-linkable silicone composition.

It is recommended to uniformly disperse the cross-linkable silicone composition in a dispersing medium by using an emulsifier such as a homogenous mixer, paddle mixer, Henschel mixer, homogenous disperser, colloidal mill, propeller-type agitator, homogenizer, in-line-type continuous emulsifier, ultrasonic emulsifier, vacuum-type continuous mixer, etc. A dispersion, or slurry, of the cross-linkable silicone composition thus obtained can be cross-linked by adding the required condensation-reaction catalyst, whereby a dispersion, or slurry, of the cross-linked silicone particles is obtained. The final cross-linked silicone particles are obtained after removing the dispersing medium from the dispersion, or slurry.

In the method of the invention, if the dispersing medium is water, the latter can be removed, e.g., by thermal dehydration, filtration, centrifugal separation, decantation, etc., and after the dispersion is condensed, the product can be washed with water if necessary. The product can be further dried by the following methods: heating at normal or reduced pressure, pulverizing the dispersion in a flow of hot air, or heating by using a flow of a hot medium. If the cross-linked silicone particles obtained after removal of the dispersing medium aggregate, they may further disintegrated in a jet mill or mortar.

Examples

The cross-linked silicone particles of the invention and method of manufacturing thereof will be further explained with reference to practical and comparative examples. The characteristics used in these examples have values measured at 25°C. Furthermore, the following methods were used for measuring the characteristics of cross-linked silicone particles.

[Average Particle Size]

Average particle size was measured in an aqueous-dispersed state by means of a Model LA-500 laser-diffraction particle-distribution measurement instrument of Horiba Seisakusho Co., Ltd. as a median diameter (which is the particle diameter corresponding to 50% of the cumulative distribution). The obtained median diameter was considered to be the average size of a cross-linked silicone particle.

[Type-A-Durometer Hardness]

The condensation-cross-linkable silicone composition used for forming the cross-linked silicone particles was dearerated, and after retaining for one day at a temperature of 25°C, the composition was formed into a 1-millimeter-thick cross-linked silicone sheet. Type-A- durometer hardness in accordance with JIS K 6253 was determined by measuring hardness of the sheet with use of the HSB microhardness tester for rubber, the product of H. W. Wallace Company.

[Content of Amino Groups]

Cross-linked silicone particles measured in the precise weight of 0.2 g were placed into a beaker, mixed with 30 ml of chloroform and 10 ml of acetic acid, and then by using a titration solution in the form of a 0.01 N dioxane solution of perchloric acid (a factor of perchloric acid solution: F), the content of amino groups in the cross-linked silicone particles was determined from the end point, i.e., equivalent point (ml), with use of a potentiometric titration instrument by means of the following formula:

$$\text{Content of amino groups (wt. \%)} = \{[0.01 \times F \times (\text{equivalent point}) \text{ (ml)} \times (\text{molecular weight of amino groups})] / [\text{weight (g) of cross-linked silicone particles}]\} \times 100$$

[Practical Example 1]

A silicone composition was prepared by uniformly mixing the following components: 86.4 parts by weight of a dimethylpolysiloxane represented by the following average formula:

$$HO\text{-}[Si(CH_3)_2O]_{12}\text{-}H$$

which is capped at both molecular terminals with silanol groups and had viscosity of 40 mPa·s (content of silanol groups equals 4.0 wt. %); 9.1 parts by weight of a methylhydrogenpolysiloxane capped at both molecular terminals with trimethylsiloxy groups and having viscosity of 10 mPa·s (content of silicon-bonded hydrogen atoms equal 1.5 wt. %) and 4.5 parts by weight of 3-anilinopropyltrimethoxysilane. A 5-part-by-weight mixture obtained by combining the composition with secondary tridecylether and secondary dodecylether of ethylene oxide (7-mol addition) (43 wt. % of dodecyl groups, 57 wt. % of tridecyl groups, and HLB equal to 12.8), and 97 parts by weight of water were premixed, and then the obtained product was emulsified in a colloidal mill and diluted with 100 parts by weight of pure water, whereby an aqueous emulsion of the silicone composition was prepared.

Following this, 1 part by weight of a mixture obtained by combining 1 part by weight of tin (II) octoate was combined with 1 part by weight of a mixture of secondary tridecylether and secondary dodecylether of ethylene oxide (7-mol addition) (43 wt. % of dodecyl groups, 57 wt. % of tridecyl groups, and HLB equal to 12.8), and the obtained mixture was combined with 10 parts by weight of pure water. The product was emulsified, whereby an aqueous emulsion of tin octoate with average particle size equal to 1.2 $\mu$m was prepared. The obtained emulsion was uniformly mixed with the aforementioned aqueous emulsion of the silicone composition and retained in a quiescent state for one day, whereby the silicone composition emulsified in water was cross-linked and produced a uniform aqueous suspension of silicone rubber particles which were free of gel substance. The obtained aqueous suspension was dried in a hot-air-flow dryer resulting in the collection of silicone rubber particles having dimethylsiloxane blocks represented by the following average formula:

$$-[Si(CH_3)_2O]_{12}-$$

The average particle size, Type-A-durometer hardness, and content of anilino groups are shown in Table 1.

[Comparative Example 1]

Silicone rubber particles having dimethylsiloxane blocks represented by the following average formula:

$$-[Si(CH_3)_2O]_{40}-$$

were prepared by the same method as in Practical Example 1, except that a dimethylpolysiloxane, represented by the following average formula,

$$HO-[Si(CH_3)_2O]_{40}-H$$

which was capped at both molecular terminals with silanol groups and had viscosity of 80 mPa·s (content of silanol groups equals 1.1 wt. %) was used in the same amount as before instead of the dimethylpolysiloxane capped at both molecular terminals with silanol groups and having viscosity of 40 mPa·s and except that 3.2 parts by weight of 3-aminopropyltrimethoxysilane were used instead of 4.5 parts by weight of the aforementioned 3-anilinopropyltrimethoxysilane. The average particle size, Type-A-durometer hardness, and content of amino groups are shown in Table 1.

[Comparative Example 2]

Silicone rubber particles having dimethylsiloxane blocks, represented by the following average formula,

$$-[Si(CH_3)_2O]_{40}-$$

were prepared by the same method as in Practical Example 1, except that a dimethylpolysiloxane, represented by the following average formula,

$$HO-[Si(CH_3)O]_{40}-H$$

which was capped at both molecular terminals with silanol groups and had viscosity of 80 mPa·s (content of silanol groups equals 1.1 wt. %) was used in the same amount as before ' instead of the dimethylpolysiloxane capped at both molecular terminals with silanol groups and having viscosity of 40 mPa·s and except that the aforementioned 3-anilinopropyltrimethoxysilane was not used. The average particle size and Type-A-durometer hardness are shown in Table 1.

[Comparative Example 3]

Silicone rubber particles having dimethylsiloxane blocks, represented by the following average formula,

$$-[Si(CH_3)_2O]_{40}-$$

were prepared by the same method as in Practical Example 1, except that a dimethylpolysiloxane, represented by the following average formula,

$$HO-[Si(CH_3)_2O]_{40}-H$$

which was capped at both molecular terminals with silanol groups and had viscosity of 80 mPa·s (content of silanol groups equals 1.1 wt. %) was used in the same amount as before instead of the dimethylpolysiloxane capped at both molecular terminals with silanol groups and having viscosity of 40 mPa·s and except that 4.55 parts by weight of 3-glicidoxypropyltrimethoxysilane were used instead of 4.5 parts by weight of the aforementioned 3-anilinopropyltrimethoxysilane. The average particle size and Type-A-durometer hardness are shown in Table 1.

[Table 1]

|  | Pr. Ex. 1 | Comp. Ex. 1 | Comp. Ex. 2 | Comp. Ex. 3 |
|---|---|---|---|---|
| Average particle size (μm) | 1.9 | 2.5 | 2.0 | 2.5 |
| Type-A-Durometer hardness | 67 | 41 | 57 | 35 |
| Content of amino groups (wt. %) | 1.56 | 0.29 | 0 | - |

Following this, a curable epoxy-resin composition combined with cross-linked silicone particles was prepared and evaluated according to the methods given below with regard to flowability in molding and characteristics of a cured body obtained from this composition. The aforementioned cured body was obtained by subjecting the curable epoxy-resin composition to transfer press molding for 2 minutes at a temperature of 175°C under a pressure of 70 kgf/cm$^2$ with subsequent post-curing for 5 hours at 180°C.

[Flowability in Molding]

[0046] - Spiral flow was measured at a temperature of 175°C and under a pressure of 70 kgf/cm$^2$ in accordance with the EMMI standard.

[Properties of a Cured Body]

[0047] - Flexural modulus of elasticity was measured in accordance with JIS K 6911.

- Flexural strength was measured in accordance with JIS K 6911.

[Application Example 1]

A curable epoxy-resin composition was prepared by melting and uniformly mixing in a hot two-roll mill the following components: 51 parts by weight of a biphenyl-aralkyl-type epoxy resin (NC 3000, the product of Nippon Kayaku Company, Ltd.; epoxy-resin equivalent = 275; softening point = 56°C); 39.0 parts by weight of a biphenyl-arallkyl-type phenol resin (MEH 7851M, the product of Meiwa Kasei Company, Ltd.; phenolic hydroxyl group equivalent = 207; softening point is 80°C); 9 parts by weight of the silicone rubber particles obtained in Practical Example 1; 510 parts by weight of amorphous spherical silica having an average particle size of 14 $\mu$m (FB-48X, the product of Denki Kagaku Kogyo Company, Ltd.); 1 part by weight of triphenylphosphine; and 1 part by weight of Carnauba wax. Characteristics of the thus-prepared curable epoxy-resin composition and of a cured body obtained from this composition are shown in Table 2.

[Application Example 2]

A curable epoxy-resin composition was prepared by melting and uniformly mixing in a hot two-roll mill the following components: 51 parts by weight of a biphenyl-aralkyl-type epoxy resin (NC 3000, the product of Nippon Kayaku Company, Ltd.; epoxy-resin equivalent = 275; softening point = 56°C); 39.0 parts by weight of a biphenyl-aralkyl-type phenol resin (MEH 7851M, the product of Meiwa Kasei Company, Ltd.; phenolic hydroxyl group equivalent = 207; softening point is 80°C); 18 parts by weight of the silicone rubber particles obtained in Practical Example 1; 510 parts by weight of amorphous spherical silica having an average particle size of 14 $\mu$m (FB-48X, the product of Denki Kagaku Kogyo Company, Ltd.); 1 part by weight of triphenylphosphine; and 1 part by weight of Carnauba wax. Characteristics of the thus-prepared curable epoxy-resin composition and of a cured body obtained from this composition are shown in Table 2.

[Application Example 3]

A curable epoxy-resin composition was prepared by melting and uniformly mixing in a hot two-roll mill the following components: 51 parts by weight of a biphenyl-aralkyl-type epoxy resin (NC 3000, the product of Nippon Kayaku Company, Ltd.; epoxy-resin equivalent = 275; softening point = 56°C); 39.0 parts by weight of a biphenyl-aralkyl-type phenol resin (MEH 7851M, the product of Meiwa Kasei Company, Ltd.; phenolic hydroxyl group equivalent = 207; softening point is 80°C); 9 parts by weight of the silicone rubber particles obtained in Comparative Example 1; 510 parts by weight of amorphous spherical silica having an average particle size of 14 $\mu$m (FB-48X, the product of Denki Kagaku Kogyo Company, Ltd.); 1 part by weight of triphenylphosphine; and I part by weight of Carnauba wax. Characteristics of the thus-prepared curable epoxy-resin composition and of a cured body obtained from this composition are shown in Table 2.

[Application Example 4]

A curable epoxy-resin composition was prepared by melting and uniformly mixing in a hot two-roll mill the following components: 51 parts by weight of a biphenyl-aralkyl-type epoxy resin (NC 3000, the product of Nippon Kayaku Company, Ltd.; epoxy-resin equivalent = 275; softening point = 56°C); 39.0 parts by weight of a biphenyl-aralkyl-type phenol resin (MEH 7851M, the product of Meiwa Kasei Company, Ltd.; phenolic hydroxyl group equivalent= 207; softening point is 80°C); 9 parts by weight of the silicone rubber particles obtained in Comparative Example 2; 510 parts by weight of amorphous spherical silica having an average particle size of 14 $\mu$m (FB-48X, the product of Denki Kagaku Kogyo Company, Ltd.); 1 part by weight of triphenylphosphine; and 1 part by weight of Carnauba wax. Characteristics of the thus-prepared curable epoxy-resin composition and of a cured body obtained from this composition are shown in Table 2.

[Application Example 5]

A curable epoxy-resin composition was prepared by melting and uniformly mixing in a hot two-roll mill the following components: 51 parts by weight of a biphenyl-aralkyl-type epoxy resin (NC 3000, the product of Nippon Kayaku Company, Ltd.; epoxy-resin equivalent = 275; softening point = 56°C); 39.0 parts by weight of a biphenyl-aralkyl-type phenol resin (MEH 7851M, the product of Meiwa Kasei Company, Ltd.; phenolic hydroxyl group equivalent = 207; softening point is 80°C); 9 parts by weight of the silicone rubber particles obtained in Comparative Example 3; 510 parts by weight of amorphous spherical silica having an average particle size of 14 $\mu$m (FB-48X, the product of Denki Kagaku Kogyo Company, Ltd.); 1 part by weight of triphenylphosphine; and 1 part by weight of Carnauba wax. Characteristics of the thus-prepared curable epoxy-resin composition and of a cured body obtained from this composition are shown in Table 2.

[Application Example 6]

A curable epoxy-resin composition was prepared by melting and uniformly mixing in a hot two-roll mill the following components: 51.5 parts by weight of a biphenyl-aralkyl-type epoxy resin (NC 3000, the product of Nippon Kayaku Company, Ltd.; epoxy-resin equivalent = 275; softening point = 56°C); 38.5 parts by weight of a biphenyl-aralkyl-type phenol resin (MEH 7851M, the product of Meiwa Kasei Company, Ltd.; phenolic hydroxyl group equivalent = 207; softening point is 80°C); 510 parts by weight of amorphous spherical silica having an average particle size of 14 $\mu$m (FB-48X, the product of Denki Kagaku Kogyo Company, Ltd.); 1 part by weight of triphenylphosphine; and 1 part by weight of Carnauba wax. Characteristics of the thus-prepared curable epoxy-resin composition and of a cured body obtained from this composition are shown in Table 2.

[Table 2]

|  | Application Examples | | | | | |
|---|---|---|---|---|---|---|
|  | 1 | 2 | 3 | 4 | 5 | 6 |
| Spiral flow (in.) | 13 | 14 | 7 | 11 | 12 | 13 |
| Flexural modulus of elasticity (kgf/mm$^2$) | 1890 | 1730 | 1910 | 1900 | 1870 | 2170 |
| Flexural strength (kgf/mm$^2$) | 15.2 | 12.1 | 14.3 | 14.0 | 14.6 | 17.2 |

Industrial Applicability

Since the cross-linked silicone particles of the present invention possess excellent dispersibility in organic resins, and, when mixed with curable organic compositions improve flowability of the composition in molding and reduce modulus of elasticity of cured bodied obtained from the aforementioned composition, the particles of the invention may be combined with coating materials, thermosetting organic compositions, thermoplastic organic compositions, etc., or with surface lubricating agents of plastic films for improving moldability, lubricating properties, mold-release properties, inner stress-relaxation properties, tactile properties, or other characteristics of the aforementioned materials. When the cross-linked silicone particles are mixed with a coating material, they make it possible to produce coating films with excellent delustering properties which impart feeling of high grade to plastic or metal goods.

**Claims**

1.   Cross-linked silicone particles **characterized by** having secondary amino groups represented by the following general formula:

$$R^1NH\text{-}R^2\text{-}$$

(where $R^1$ designates an aryl group or an aralkyl group, and $R^2$ designates a bivalent organic group) bonded to silicon atoms that form the cross-linked silicone particles.

2. The cross-linked silicone particles of claim 1, wherein the group designated by $R^1$ in the secondary amino groups is a phenyl group.

3. The cross-linked silicone particles of claim 1, wherein the aforementioned cross-linked silicone particles have organosiloxane blocks represented by the following general formula:

$$-(R^3_2SiO)_n-$$

(where $R^3$ designates same or different univalent hydrocarbon groups, and "n" is an integer equal to or greater than 3).

4. The cross-linked silicone particles of claim 1, wherein the average diameter of the cross-linked silicone particles is in the range of 0.1 to 500 $\mu$m.

5. The cross-linked silicone particles of claim 1, wherein the content of the secondary amino groups in the cross-linked silicone particles is in the range of 0.3 to 3.0 wt. %.

6. A method of manufacturing cross-linked silicone particles of claim 1 by cross-linking a cross-linkable silicone composition comprising components (A) to (C), given below, said composition being cross-linked in a water-dispersed state:

   (A) an organopolysiloxane that contains in one molecule at least two silanol groups;
   (B) an alkoxysilane that contains a secondary amino group and is represented by the following general formula:

$$R^1NH-R^2-SiR^4_a(OR^5)_{(3-a)}$$

   (where $R^1$ is an aryl group or an aralkyl group; $R^2$ is a bivalent organic group; $R^4$ is a univalent hydrocarbon group; $R^5$ is an alkyl group; and "a" is 0 or 1); and
   (C) a condensation-reaction catalyst.

7. The method of manufacturing cross-linked silicon particles according to claim 6, wherein component (A) is an organopolysiloxane represented by the following general formula:

$$HO-(R^3_2SiO)_n-H$$

(where $R^3$ designates same or different univalent hydrocarbon groups, and "n" is an integer equal to or greater than 3).

8. The method of manufacturing cross-linked silicone particles according to claim 6, wherein the group designated by $R^1$ in component (B) is a phenyl group.

9. The method of manufacturing cross-linked silicone particles according to claim 6, wherein the cross-linkable silicone composition further comprises component (D), which is an organopolysiloxane having at least two silicon-bonded hydrogen atoms in one molecule.

**Patentansprüche**

1. Vernetzte Siliconteilchen, **dadurch gekennzeichnet, dass** sie sekundäre Aminogruppen aufweisen, die durch die folgende allgemeine Formel:

$$R^1NH-R^2-$$

(worin $R^1$ eine Arylgruppe oder eine Aralkylgruppe bezeichnet und $R^2$ eine zweibindige organische Gruppe bezeichnet) wiedergegeben sind und an Siliciumatome gebunden sind, die die vernetzten Siliconteilchen bilden.

**2.** Vernetzte Siliconteilchen nach Anspruch 1, wobei die Gruppe, die in den sekundären Aminogruppen mit $R^1$ bezeichnet wird, eine Phenylgruppe ist.

**3.** Vernetzte Siliconteilchen nach Anspruch 1, wobei die zuvor erwähnten vernetzten Siliconteilchen Organosiloxanblöcke aufweisen, die durch die folgende allgemeine Formel:

$$-(R^3_2SiO)_n-$$

(worin $R^3$ gleiche oder unterschiedliche einbindige Kohlenwasserstoffgruppen bezeichnet und "n" eine ganze Zahl gleich oder größer 3 ist) wiedergegeben sind.

**4.** Vernetzte Siliconteilchen nach Anspruch 1, wobei der mittlere Durchmesser der vernetzten Siliconteilchen im Bereich von 0,1 bis 500 $\mu$m liegt.

**5.** Vernetzte Siliconteilchen nach Anspruch 1, wobei der Gehalt der sekundären Aminogruppen in den vernetzten Siliconteilchen im Bereich von 0,3 bis 3,0 Gew.-% liegt.

**6.** Verfahren zur Herstellung von vernetzten Siliconteilchen nach Anspruch 1 durch Vernetzen einer vernetzbaren Siliconzusammensetzung, die die unten angegebenen Komponenten (A) bis (C) enthält, wobei diese Zusammensetzung in einem in Wasser dispergierten Zustand vernetzt wird:

(A) ein Organopolysiloxan, das in einem Molekül mindestens zwei Silanolgruppen enthält;
(B) ein Alkoxysilan, das eine sekundäre Aminogruppe enthält und durch die folgende allgemeine Formel:

$$R^1NH-R^2-SiR^4_a(OR^5)_{(3-a)}$$

(worin $R^1$ eine Arylgruppe oder eine Aralkylgruppe ist; $R^2$ eine zweibindige organische Gruppe ist; $R^4$ eine einbindige Kohlenwasserstoffgruppe ist; $R^5$ eine Alkylgruppe ist und "a" gleich 0 oder 1 ist) wiedergegeben ist, und
(C) einen Kondensationsreaktionskatalysator.

**7.** Verfahren zur Herstellung von vernetzten Siliconteilchen nach Anspruch 6, wobei Komponente (A) ein Organopolysiloxan ist, das durch die folgende allgemeine Formel:

$$HO-(R^3_2SiO)_n-H$$

(worin $R^3$ gleiche oder unterschiedliche einbindige Kohlenwasserstoffgruppen bezeichnet und "n" eine ganze Zahl gleich oder größer 3 ist) wiedergegeben ist.

**8.** Verfahren zur Herstellung von vernetzten Siliconteilchen nach Anspruch 6, wobei die Gruppe, die in Komponente (B) mit $R^1$ bezeichnet wird, eine Phenylgruppe ist.

**9.** Verfahren zur Herstellung von vernetzten Siliconteilchen nach Anspruch 6, wobei die vernetzbare Siliconzusammensetzung ferner Komponente (D) enthält, die ein Organopolysiloxan mit mindestens zwei siliciumgebundenen Wasserstoffatomen in einem Molekül ist.

**Revendications**

**1.** Particules de silicone réticulée **caractérisées en ce qu'**elles possèdent des groupes aminés secondaires représentés par la formule générale suivante :

$$R^1NH-R^2-$$

(où $R^1$ désigne un groupe aryle ou un groupe aralkyle et $R^2$ désigne un groupe organique bivalent) liés aux atomes de silicium qui forment les particules de silicone réticulée.

**2.** Particules de silicone réticulée de la revendication 1, dans lesquelles le groupe désigné par $R^1$ dans les groupes

aminés secondaires est un groupe phényle.

3. Particules de silicone réticulée de la revendication 1, dans lesquelles les particules de silicone réticulée susmentionnées possèdent des polymères séquencés organosiloxanes représentés par la formule générale suivante :

$$-(R^3_2SiO)_n-$$

(où $R^3$ désigne des groupes hydrocarbures univalents identiques ou différents et « n » est un nombre entier égal ou supérieur à 3).

4. Particules de silicone réticulée de la revendication 1, dans lesquelles le diamètre moyen des particules de silicone réticulée est compris entre 0,1 et 500 $\mu$m.

5. Particules de silicone réticulée de la revendication 1, dans lesquelles la concentration en groupes aminés secondaires dans les particules de silicone réticulée est comprise entre 0,3 et 3,0 % en masse.

6. Procédé de fabrication de particules de silicone réticulée de la revendication 1 par réticulation d'une composition de silicone réticulable comprenant les composants (A) à (C), donnés ci-dessous, ladite composition étant réticulée dans un état dispersé dans l'eau :

(A) un organopolysiloxane qui contient, dans une molécule, au moins deux groupes silanols ;
(B) un alcoxysilane qui contient un groupe aminé secondaire et qui est représenté par la formule générale suivante :

$$R^1NH-R^2-SiR^4_a(OR^5)_{(3-a)}$$

(où $R^1$ est un groupe aryle ou un groupe aralkyle ; $R^2$ est un groupe organique bivalent ; $R^4$ est un groupe hydrocarbure univalent ; $R^5$ est un groupe alkyle ; et « a » vaut 0 ou 1) ; et
(C) un catalyseur de réaction de condensation.

7. Procédé de fabrication de particules de silicone réticulée selon la revendication 6, dans lequel le composant (A) est un organopolysiloxane représenté par la formule générale suivante :

$$HO-(R^3_2SiO)_n-H$$

(où $R^3$ désigne des groupes hydrocarbures univalents identiques ou différents et « n » est un nombre entier égal ou supérieur à 3).

8. Procédé de fabrication de particules de silicone réticulée selon la revendication 6, dans lequel le groupe désigné par $R^1$ dans le composant (B) est un groupe phényle.

9. Procédé de fabrication de particules de silicone réticulée selon la revendication 6, dans lequel la composition de silicone réticulable comprend également le composant (D), qui est un organopolysiloxane ayant au moins deux atomes d'hydrogène liés à du silicium dans une molécule.

**EP 2 144 953 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H02113079 B
- JP H04266928 B
- JP H08109262 B